# DEMANDE DE BREVET EUROPEEN

(11) **EP 1 770 338 A1**
(43) Date de publication de la demande: **04.04.2007**
(21) Numéro de dépôt: 06291540.0
(22) Date de dépôt: 02.10.2006
(51) Int. Cl.: F24D 19/10, F24H 9/20

(54) **Système de controle de la température dans un local, à l'aide d'un radiateur, notamment électrique**

(30) Priorité: 03.10.2005 FR 0510093
(71) Demandeur: NKE, 56700 Hennebont (FR)
(72) Inventeur: Malaval, Jean-Luc, 91270 Vigneux sur Seine (FR)
(74) Mandataire: Thinat, Michel

(57) **Abrégé**

L'invention concerne un système de contrôle de la température ambiante dans un local, à l'aide d'un radiateur.

Le système est du type comprenant un dispositif (3) de commande du radiateur, susceptible d'être monté sur celui-ci à un endroit tel qu'au bas du radiateur et comportant une sonde (9) de la température ambiante, un dispositif (4) de réglage d'une température de consigne et un dispositif (10) de comparaison de la température mesurée à la température de consigne et d'établissement d'un signal de commande du radiateur en fonction du résultat de la comparaison. Le système est caractérisé en ce que le dispositif (4) de réglage de la température de consigne est déporté à un endroit d'accès aisé et en ce que les dispositifs de réglage (4) et de commande (3) sont interconnectés par des moyens de transmission sans fil (6) des données représentatives de la température de consigne.

L'invention est utilisable pour des radiateurs, notamment électriques.

## Description

L'invention concerne un système de contrôle de la température ambiante dans un local, à l'aide d'un radiateur, notamment électrique, du type comprenant un dispositif de commande du radiateur, susceptible d'être monté sur celui-ci à un endroit, tel qu'un endroit au bas du radiateur, et comportant une sonde de la température ambiante, un dispositif de réglage d'une température de consigne et des moyens de comparaison de la température mesurée à la température de consigne et d'établissement d'un signal de commande du radiateur en fonction du résultat de la comparaison.

Dans les systèmes de contrôle de ce type, qui sont connus, le dispositif de réglage de la température de consigne, tel qu'un bouton, une molette ou analogue, est monté sur un boîtier enfermant le dispositif de commande et disposé, en général, en bas du radiateur au ras du sol, ce qui présente l'inconvénient que l'organe de réglage est d'accès difficile.

L'invention a pour but de proposer un système tel que défini plus haut, qui pallie cet inconvénient.

Pour atteindre ce but, le système selon l'invention est caractérisé en ce que le dispositif de réglage de la température de consigne est déporté à un endroit d'accès aisé et en ce que le dispositif de réglage et le dispositif de commande sont interconnectés par des moyens de transmission sans fil des données représentatives de la température de consigne.

Selon une caractéristique de l'invention, le système est caractérisé en ce que le dispositif de réglage déporté comporte un organe de réglage de la température de consigne et un émetteur destiné à émettre des données relatives à la position de l'organe de réglage.

Selon une autre caractéristique de l'invention, le système est caractérisé en ce que l'émetteur est adapté pour émettre des signaux de données représentatives de la température de consigne à des intervalles réguliers, choisis de façon à assurer un contrôle approximativement régulier.

Selon encore une autre caractéristique de l'invention, le système est caractérisé en ce que le dispositif de commande comporte un récepteur des signaux en provenance du dispositif de réglage de la température de consigne, dont la sortie est reliée à une entrée d'un dispositif de comparaison de la valeur de température de consigne à une valeur de température ambiante et qui est destinée à produire un signal de commande du radiateur.

Selon une autre caractéristique de l'invention, le système est caractérisé en ce qu'il comprend un organe tel qu'un interrupteur interposé entre une source d'énergie électrique et la sortie de commande et commandé par le dispositif électronique.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un système de contrôle de la température d'un local, selon l'invention, et
- la figure 2 est un schéma-bloc représentant schématiquement les différents éléments du système selon la figure 1.

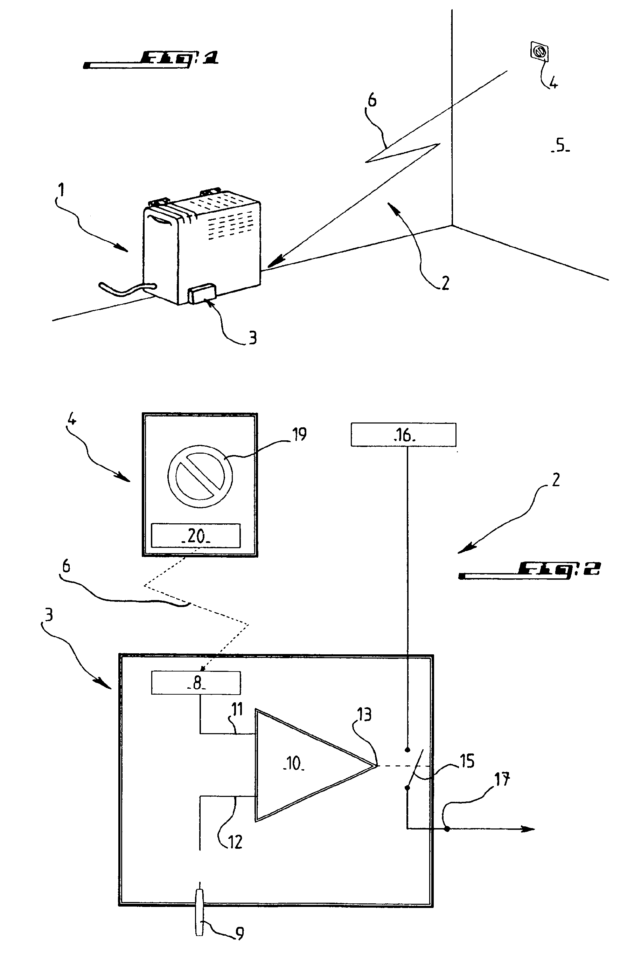

Comme on le voit sur la figure 1, le système de contrôle de la température d'un local, selon l'invention, à l'aide d'un radiateur 1, notamment électrique, installé dans ce local, comprend un agencement de commande du pouvoir de chauffage du radiateur, désigné par la référence générale 2. Cet agencement comporte un boîtier 3 qui est monté sur le radiateur 1, au bas de celui-ci, au ras du sol, et enferme un dispositif thermostat destiné à engendrer des signaux de commande du radiateur par comparaison de la température mesurée à une température de consigne, et un dispositif 4 de réglage de la température de consigne, qui est déporté et placé à un endroit d'accès aisé, par exemple sur un mur indiqué en 5.

Le dispositif déporté 4 et le boîtier 3 d'établissement des signaux de commande sont interconnectés par des moyens de transmission de données sans fil symbolisés en 6. Cette liaison pourrait être une liaison de radiofréquence HF ou du type à faisceau infrarouge ou analogue.

Comme on le voit sur la figure 2, le boîtier 3 comporte plus précisément un récepteur 8 des signaux transmis sans fil par la liaison 6, par le dispositif de réglage de la température de consigne 4, une sonde embarquée 8 de mesure de la température ambiante, un dispositif 10 de comparaison des valeurs de température de consigne et de température ambiante et d'établissement d'un signal de commande de chauffe du radiateur. Le dispositif 10 comporte à cette fin une entrée 11 reliée au récepteur 8, une entrée 12 reliée à la sonde embarquée 9 et une sortie 13 reliée, dans l'exemple représenté, à un interrupteur 15 interposé entre la source d'alimentation en énergie électrique 16, telle qu'une prise du secteur, et la sortie de commande 17 du boîtier qui est reliée au dispositif de chauffe du radiateur.

Le dispositif déporté 4 comporte un organe 19 de réglage de la température de consigne, tel qu'un bouton, une molette ou tout autre afficheur, et un émetteur 20 des données de consigne représentatives à la position de l'organe 19.

Il est à noter que, après chaque actionnement de l'organe de réglage de température de consigne 19, cette information de consigne est constamment disponible dans le dispositif 14 car elle réside dans la position de cet organe. L'information de la température de consigne est transmise à des intervalles réguliers, par exemple toutes les cinq minutes, au récepteur 8 du thermostat enfermé dans le boîtier 3. Par conséquent le dispositif comparateur et générateur du signal de commande, dispose régulièrement de l'information de consigne, ce qui assure un contrôle permanent de la température ambiante, sans que le thermostat doive être équipé d'une mémoire de consigne spécifique.

L'envoi à des intervalles réguliers permet d'arrêter le radiateur à l'intérieur des intervalles. Le radiateur produit alors des signaux aux instants de réception, qui modulent le rapport cyclique de l'interrupteur. En l'absence du signal de consigne pendant un temps prédéterminé, le radiateur est placé en arrêt.

Par conséquent, le dispositif thermostat peut être un thermostat standard auquel on a associé un récepteur 8 des signaux sans fil. Ainsi la transmission à intervalle régulier par le dispositif déporté 4 d'un signal représentatif de la température de consigne remplace la liaison filaire à l'intérieur des boîtiers de commande standards, qui interconnectent l'organe de réglage de température de consigne au dispositif de comparaison et d'établissement des signaux de commande du radiateur.

Il ressort de la description qui vient d'être faite et des figures, qu'en déportant le dispositif de réglage de la température de consigne et en assurant l'envoi des signaux de consigne, à des intervalles réguliers, au dispositif thermostat prévu sur le radiateur, le but de l'invention est parfaitement atteint, qui consiste à placer le dispositif de réglage dans une zone pratique d'accès et à bonne hauteur dans le local dont la température doit être contrôlée tout en conservant une structure simple de moyens utilisés qui peuvent être des moyens standards. Il suffit, par rapport aux systèmes connus, de placer un récepteur des signaux sans fil dans le dispositif thermostat et de prévoir dans le dispositif déporté un émetteur qui pourrait supporter le dispositif de réglage de la température de consigne.

## Revendications

1. Système de contrôle de la température ambiante dans un local, à l'aide d'un radiateur, notamment électrique, du type comprenant un dispositif de commande du radiateur, susceptible d'être monté sur celui-ci à un endroit tel qu'au bas du radiateur et comportant une sonde de la température ambiante, un dispositif de réglage d'une température de consigne et un dispositif de comparaison de la température mesurée à la température de consigne et d'établissement d'un signal de commande du radiateur en fonction du résultat de la comparaison, **caractérisé en ce que** le dispositif (4) de réglage de la température de consigne est déporté à un endroit d'accès aisé et **en ce que** les dispositifs de réglage (4) et de commande (3) sont interconnectés par des moyens de transmission sans fil (6) des données représentatives de la température de consigne.

2. Système selon la revendication 1, **caractérisé en ce que** le dispositif de réglage déporté (4) comporte un organe (19) de réglage de la température de consigne et un émetteur (20) destiné à émettre des données relatives à la position de l'organe de réglage (19).

3. Système selon la revendication 2, **caractérisé en ce que** l'émetteur (20) est adapté pour émettre des signaux de données représentatives de la température de consigne à des intervalles avantageusement réguliers, choisis de façon à assurer un contrôle approximativement régulier.

4. Système selon l'une des revendications 1 à 3, **caractérisé en ce que** le dispositif de commande (3) comporte un récepteur (8) des signaux en provenance du dispositif de réglage (4) de la température de consigne, dont la sortie est reliée à une entrée (11) d'un dispositif (10) de comparaison de la valeur de température de consigne à une valeur de température ambiante et qui est destinée à produire un signal de commande du radiateur.

5. Système selon la revendication 4, **caractérisé en ce qu'**il comprend un organe tel qu'un interrupteur (15) interposé entre une source d'énergie électrique (16) et la sortie de commande (17) et commandé par le dispositif électronique (3).
